# FASCICULE DE BREVET EUROPEEN

(11) **EP 0 343 083 B1**
(45) Date de publication et mention de la délivrance du brevet: **24.02.1993**
(21) Numéro de dépôt: 89401384.6
(22) Date de dépôt: 19.05.1989
(51) Int. Cl.: H04L 7/04

(54) **Dispositif de détection de perte de synchronisation et son utilisation dans un réseau de transmisson numérique**
Synchronisationsverlust-Detektionseinrichtung und deren Anwendung in einem Digitalübertragungsnetz
Loss of synchronisation detection device, and its use in a digital transmission network

(30) Priorité: 20.05.1988 FR 8806762
(43) Date de publication de la demande: 23.11.1989
(73) Titulaire: THOMSON-CSF, 75008 Paris (FR)
(72) Inventeur: Richard, Christian, F-92045 Paris La Défense (FR); Barre, Daniel, F-92045 Paris La Défense (FR)
(74) Mandataire: Lincot, Georges

(56) Documents cités:
- EP-A- 0 254 386
- FR-A- 2 404 972

## Description

L'invention se rapporte aux systèmes de transmission d'informations numériques, et plus particulièrement à un dispositif de détection de perte de synchronisation, notamment de synchronisation paquet, et aux réseaux de transmission numériques comportant un tel dispositif (Cf. par exemple Document EP-A-0 254 386).

Les transmissions numériques permettent de transmettre de la même manière et via un même support de nombreuses informations d'origines différentes, par exemple dans un réseau numérique à intégration de services. Il est ainsi possible de transmettre des données numériques issues de bases de données, des signaux vidéo codés en numérique, etc... dans un même réseau de transmission numérique. Ces informations numériques sont transmises par paquets, chaque paquet se rapportant à un même type de signal, selon une trame prédéterminée qui inclut également des paquets spécifiques relatifs à la synchronisation. Ces paquets de synchronisation sont transmis périodiquement dans des messages relatifs à un même service lorsque la transmission se prolonge dans le temps et aussi transmis systématiquement entre des messages issus de sources différentes, pour effectuer des opérations de remplissage ou "bourrage". Classiquement on transmet un paquet spécifique de synchronisation pour environ 100 paquets utiles.

Dans un tel réseau de transmission, la synchronisation paquets en réception est effectuée à partir de la reconnaissance des paquets de synchronisation, une information d'initialisation des divers compteurs, constituant la base de temps de la partie réception du système de transmission, étant élaborée lorsqu'un paquet de ce type est identifié.

Pour diverses raisons, la position d'un paquet dans le train numérique série peut subir des modifications, du fait du changement d'état de la partie émission, du fait du déphasage en ligne, ou du fait d'un défaut d'horloge à l'émission par exemple ; ce qui conduit à une restitution erronée de la séquence des paquets et donc des informations qu'ils contiennent. La transmission n'est normalement rétablie qu'au moment de la réception du paquet de synchronisation suivant qui impose à nouveau une phase correcte à la base de temps réception.

Dans un tel réseau de transmission numérique par paquets, il est intéressant de délivrer à l'exploitant une information indiquant qu'une perte de synchronisation paquet en cours de transmission a eu lieu, notamment du fait que cette synchronisation est un paramètre fondamental du système qui permet à la réception la validation et l'aiguillage des différents types de données.

L'invention a pour objet un dispositif de détection de perte de synchronisation, notamment adapté aux réseaux de transmission d'informations numériques par paquets.

Selon l'invention, un dispositif de détection de perte de synchronisation dans un réseau de transmission d'informations numériques par paquets, la trame comportant des suites de paquets d'information entre lesquelles sont insérés des paquets de synchronisation, est caractérisé en ce qu'il comporte, dans les circuits de réception, un circuit à deux compteurs cycliques, comptant au rythme mot et dont la période est la durée d'un paquet, le premier initialisé par un signal de reconnaissance des paquets de synchronisation, et le second initialisé par un signal de fin de comptage issu du premier compteur, et des moyens d'analyse de la phase relative entre les deux compteurs pour générer des impulsions caractéristiques de pertes de synchronisation paquet lorsque cette phase relative est modifiée.

L'invention sera mieux comprise et d'autres caractéristiques apparaîtront à l'aide de la description qui suit en référence aux figures annexées.
- La figure 1 est le schéma synoptique d'un mode de réalisation du dispositif de détection selon l'invention ;
- La figure 2 est le chronogramme des signaux correspondant au mode de réalisation de la figure 1 lors d'une perte de synchronisation ;
- La figure 3 est un schéma détaillé d'un deuxième mode de réalisation du dispositif selon l'invention ;
- La figure 4 est un chronogramme de signaux correspondant au mode de réalisation représenté sur la figure 3, avec une synchronisation correcte ;
- La figure 5 est un chronogramme de signaux associés au mode de réalisation de la figure lors d'une perte de synchronisation ;
- La figure 6 est un schéma synoptique d'un seconde mode de réalisation du dispositif selon l'invention.

Une transmission numérique dite par paquets est telle qu'un paquet de données est constitué d'un ensemble de mots comportant n éléments binaires, n = 8 ou 9 par exemple, organisés selon une loi préétablie, ou trame, qui comporte des mots d'identification caractérisant le type de données transmises, et des mots d'information qui sont les mots de données proprement dites.

Une perte de synchronisation paquet est une modification de la phase d'au moins un élément binaire sur la ligne de transmission, et le dispositif de détection de perte de synchronisation selon l'invention permet d'élaborer cette information de perte de synchronisation. La finesse de détection de cette perte de synchronisation est définie par le nombre d'éléments binaires de décalage que le dispositif est capable de détecter. Cette finesse de détection peut, dans certains modes de réalisation, être limitée à un mot, le dispositif étant commandé au rythme mot, ce qui permet de simplifier les circuits. Il est cependant possible d'obtenir une finesse de détection égale à l'élément binaire, en utilisant la fréquence d'horloge bit.

Le principe de la détection de la perte de synchronisation est basé sur l'observation de la phase relative de deux compteurs cycliques à période paquet, commandés au rythme mot de réception : l'un des compteurs est l'image de la phase instantanée de la trame "paquet" sur la ligne de transmission tandis que l'autre compteur garde en mémoire la phase précédente de cette même trame "paquet", jusqu'au moment où la perte de synchronisme est détectée.

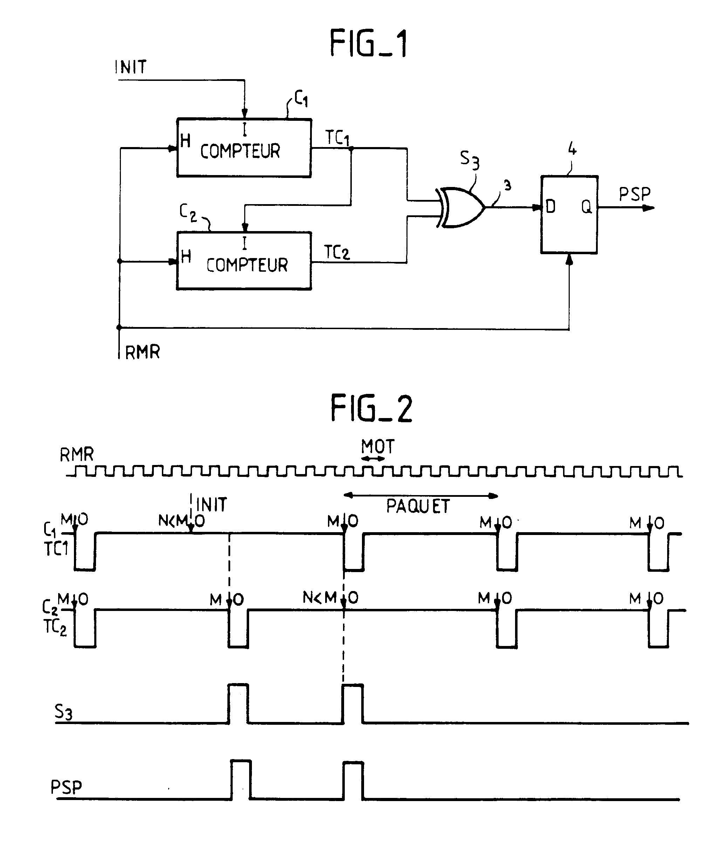

La figure 1 est le schéma synoptique du dispositif de détection de perte de synchronisation paquet selon l'invention. Le dispositif comporte un premier compteur cyclique, à période paquet, C₁ comportant une entrée d'initialisation I recevant une information d'initialisation INIT à chaque nouvelle détection de synchronisation paquet, et une entrée de commande H recevant un signal d'horloge au rythme des mots de réception, RMR. Ce signal d'horloge au rythme des mots de réception est également appliqué à l'entrée de commande H d'un second compteur cyclique à période paquet, C₂ dont l'entrée d'initialisation I, est reliée à la sortie TC₁ du premier compteur C₁. Les sorties de ces deux compteurs cycliques 1 et 2, qui fournissent des impulsions de fin de comptage TC₁ et TC₂ lorsqu'ils atteignent leur valeur maximum, soit M si chaque paquet émis comporte M mots, sont reliées aux deux entrées d'une porte logique OU exclusif, 3, dont la sortie est reliée à l'entrée d'une bascule de type D, 4, qui reçoit le rythme mot réception RMR et fournit donc le signal utile de perte de synchronisation paquet, "PSP". Ce signal de perte de synchronisation est une information d'exploitation notamment utilisable dans un centre de gestion centralisé du système de transmission numérique. La figure 2 représente le chronogramme des signaux issus des compteurs et du signal de perte de synchronisation correspondant en cas de désynchronisation. Au départ, la synchronisation existe :
- le compteur C₁ remis en phase par le dernier paquet de synchronisation reçu compte au rythme mot et est ramené à 0 en même temps qu'il fournit des impulsions de fin de comptage TC₁, à la période paquet ;
- le compteur C₂ initialisé par les impulsions de fin de comptage issues de C₁ TC₁ à la période paquet, conserve la phase précédente de la trame "paquet",.

Lorsqu'il y a une modification de la phase "paquet" en ligne, le paquet de synchronisation suivant, commandant l'initialisation du compteur C₁ sur l'entrée INIT, n'est plus en phase avec une fin de comptage et le compteur C₁ est ramené à 0 alors que son contenu était N < M, sans qu'il y ait donc d'impulsion de fin de comptage. Le compteur C₂ n'est donc pas initialisé par son entrée d'initialisation reliée à la sortie de C₁ et il continue à compter jusqu'à ce que son contenu soit maximum M ; il est alors ramené à 0 tout en émettant une impulsion de fin de comptage.

Ensuite, le compteur C₁, initialisé plus tôt, arrive à son contenu maximum M et délivre une impulsion de fin de comptage TC₁ qui initialise le compteur C₂ alors que son contenu N < M n'est pas arrivé à son maximum, et sans qu'il y ait d'impulsion TC₂ de fin de comptage. Les deux compteurs simultanément à O comptent alors de la même manière et leurs impulsions de fin de comptage sont synchrones.

Les impulsions générées en S₃ en sortie du circuit OU exclusif 3, résultant du décalage des deux compteurs C₁ et C₂ sont échantillonnées par la bascule D, 4, pour fournir le signal de perte de synchronisation paquet, PSP.

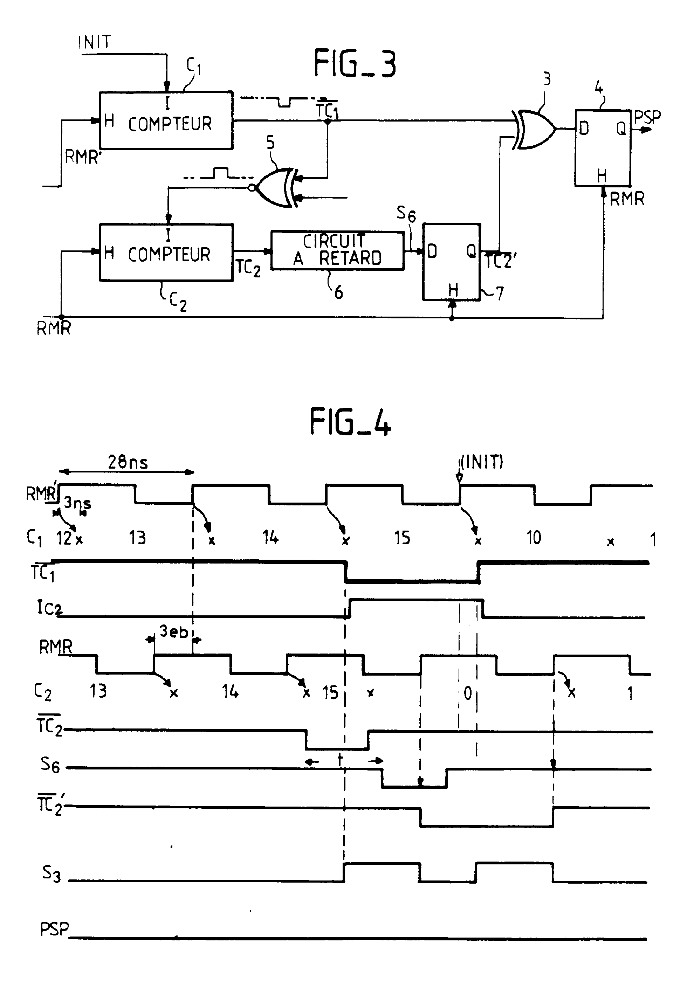

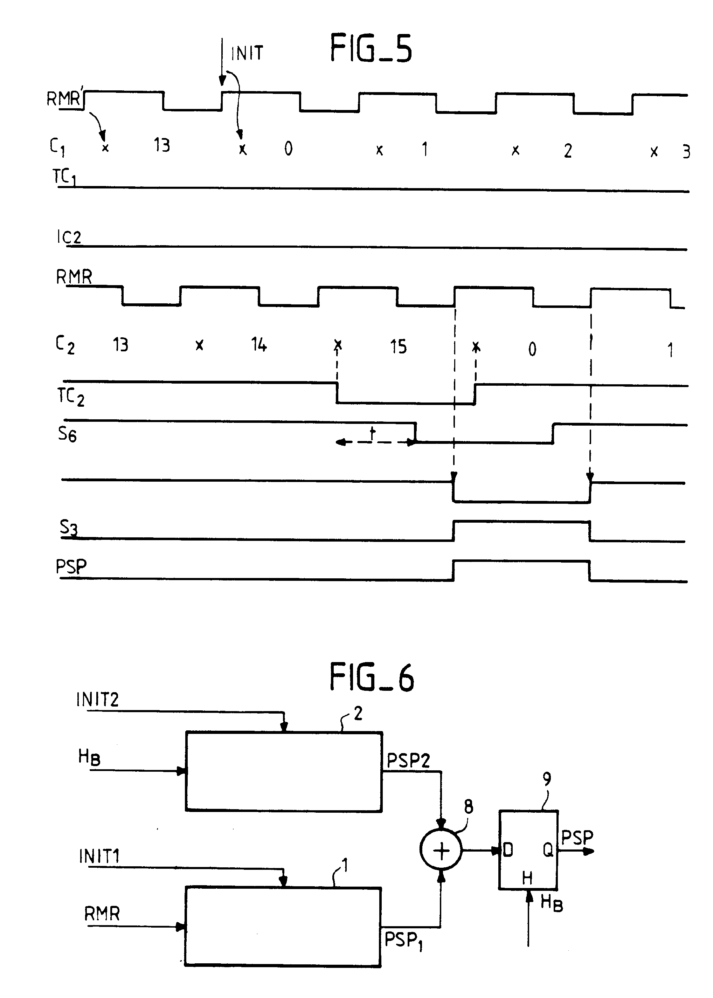

La figure 3 est un schéma détaillé d'un mode de réalisation du dispositif de détection de perte de synchronisation paquet selon l'invention, dans lequel, du fait des nécessités du système de transmission numérique utilisé, les compteurs C₁ et C₂ sont commandés par des horloges synchrones mais déphasées de trois éléments binaires. Les figures 4 et 5 sont les chronogrammes de signaux correspondants respectivement avec une synchronisation correcte et lors d'une perte de synchronisation. Ces chronogrammes montrent l'horloge RMR de comptage du compteur C₂ au rythme mot, en avance de trois éléments binaires sur l'horloge RMR′ du compteur C₁ au même rythme mot, ce décalage étant nécessaire au fonctionnement. Pour réaliser la fonction de détection de perte de synchronisation paquet selon l'invention, il est nécessaire d'échantillonner l'impulsion de fin de comptage TC₂ pour générer une impulsion correspondante TC₂′ comparable avec TC₁ dans le circuit OU exclusif. Le résultat de cette comparaison est échantillonné à l'instant où il y a superposition de TC₁ et de TC₂ "rephasés" pour générer l'information de la perte de synchronisation paquet.

Pour cela, le dispositif représenté sur la figure 3 comporte comme celui représenté sur la figure 1 les compteurs C₁ et C₂ dont les entrées de comptage reçoivent les signaux d'horloge RMR′ et RMR, au rythme mot, la porte OU exclusif 3 reliée à la sortie de C₁ , et la bascule de type D, 4. Il comporte en outre un inverseur 5, reliant la sortie de fin de comptage du compteur C₁ à l'entrée d'initialisation du compteur C₂. La sortie de fin de comptage du compteur C₂ est reliée à l'entrée d'un circuit à retard 6 dont la sortie est reliée à l'entrée D d'une bascule de type D, 7, ayant sa sortie Q reliée à la seconde entrée de la porte OU exclusif 3.

Le dispositif fonctionne de la manière expliquée ci-après en référence au chronogramme de la figure 4.

A chaque impulsion de l'horloge mot RMR′, le contenu du compteur C₁ est augmenté de 1, avec un petit retard, 3ns par exemple, par rapport au début de l'impulsion d'horloge mot, de période 28ns par exemple. Le contenu passe par exemple de 12 à 13, etc... Parallèlement et de la même façon, à chaque impulsion de l'horloge mot RMR, le contenu du compteur C₂ est augmenté de 1, et passe de 13 à 14 etc... Si chaque paquet comporte 16 mots par exemple, les compteurs comptent de 0 à 15, c'est-à-dire que lorsqu'un compteur atteint 15 une impulsion de fin de comptage TC₁ ou TC₂ est émise.

L'impulsion de fin de comptage TC₁ qui dure tant que C₁ a le contenu maximum, commande, après inversion, la remise à zéro du compteur C₂ plus tôt qu'elle n'interviendrait par commande interne, au début de l'impulsion suivante de l'horloge mot RMR. En conséquence l'impulsion de fin de comptage TC₂ est raccourcie et se termine au moment où TC₁ commence, c'est-à-dire qu'il n'y a pas de recouvrement entre TC₁ et TC₂ alors que la synchronisation est satisfaisante. En conséquence pour qu'il y ait recouvrement des deux signaux à l'entrée de la porte OU exclusif 3 et qu'il n'y ait pas d'impulsion PSP en sortie de la bascule D, en cas de bonne synchronisation, le signal de fin de comptage du compteur C₂ est retardé d'un retard t supérieur au décalage existant entre les horloges RMR et RMR′. La bascule 7 échantillonne le signal retardé S₆ sur les fronts montants de l'horloge RMR et donc forme une impulsion TC′₂ "rephasée", de la durée d'un mot, correspondant à l'impulsion retardée présente à la sortie du circuit à retard 6. Ce signal TC′₂ et le signal TC₁ appliqués à l'entrée de la porte OU, 3, génèrent deux impulsions échantillonnées à la période mot par les fronts montants de RMR et la bascule D, 4, génère un signal nul tant qu'il n'y a pas de désynchronisation.

Par contre lors d'une perte de synchronisation, des impulsions sont générées comme le montre le chronogramme correspondant à la figure 5 illustrant ce cas : Lorsqu'une resynchronisation se produit en cours de transmission, le compteur C₁ est remis à zéro avant d'avoir atteint sa valeur maximum, et l'impulsion de fin de comptage TC₁ est différée et le compteur C₂ termine complètement et librement sa période de comptage pour délivrer une impulsion de fin de comptage TC₂. Cette impulsion TC₂ provoque après échantillonnage une information de perte de synchronisation paquet, PSP, de durée égale à un mot. Une deuxième indication relative à la perte de synchronisation paquet PSP apparaît lorsque le compteur C₁ arrive en fin de comptage (non représentée sur la figure 5). Cette deuxième impulsion réinitialise l'ensemble du dispositif de détection de perte de synchronisation. Dans un mode de réalisation, les compteurs C₁ et C₂ ont été réalisés en technologie ECL, avec une horloge mot au rythme de 35 MHz. D'autres modes de réalisation utilisant d'autres technologies et travaillant dans les fréquences correspondantes sont possibles.

Du fait de sa constitution, le dispositif de détection décrit ci-dessus a une finesse de détection liée au rythme des horloges mots de réception utilisées, c'est-à-dire une finesse de détection de un mot. En d'autres termes des pertes de synchronisation inférieures à un mot peuvent ne pas être détectés par ce dispositif.

Pour obtenir une finesse de détection égale à un élément binaire, le même principe peut être utilisé en l'appliquant simultanément à des compteurs à période paquet et à des compteurs à période mot. Pour prendre en compte des désynchronisations inférieures à la période mot le schéma de la figure 1 est donc complété en y associant un dispositif semblable mais commandé au rythme de l'horloge bit H_{B}. Un tel dispositif permet de détecter une désynchronisation d'un élément binaire ou plus, modulo 1 (ou n) paquet(s). Il comporte comme représenté sur la figure 6 un premier dispositif 1 qui est celui de la figure 1 par exemple commandé au rythme mot RMR et initialisé par un signal de détection de synchronisation INIT₁ qui génère des impulsions PSP₁ en cas de perte de synchronisation, et un second dispositif 2 ayant la même structure à deux compteurs mais commandé au rythme de l'horloge bit H_{B} et initialisé par un signal de synchronisation bit de durée maximum 1 élément binaire.

Comme les compteurs du dispositif 1 sont des compteurs cycliques au rythme mot, de période égale à 1 paquet, les compteurs du dispositif 2 sont des compteurs cycliques au rythme bit, de période égale à 1 mot. Par exemple si les mots ont 8 bits, le contenu maximum de ces compteurs est 7. Ces compteurs comptant de 0 à 7.

Les sorties des dispositifs 1 et 2 sont reliées à un additionneur 8, dont la sortie est reliée à l'entrée d'une bascule de type D, 9, commandée par l'horloge bit fournit le signal final de perte de synchronisation paquet avec une précision de 1 élément binaire.

Vis-à-vis du système de transmission, un décalage en ligne modulo n paquets produit un défaut localisé mais qui ne doit normalement pas être interprété comme une désynchronisation paquet. Il résulte de la description ci-dessus que l'information de perte de synchronisation obtenue à partir de ce dispositif est connue a posteriori, mais qu'elle peut dès lors être exploitée et datée en vue d'établir un historique du comportement de la liaison. De plus il est possible de prévoir plusieurs finesses de détection, et de choisir selon la sensibilité et le type de décalage susceptible d'intervenir, pour un type de transmission donné, par exemple selon que la transmission est de type optique ou électrique, en utilisant un sélecteur permettant de choisir le circuit à période de comptage et rythme de comptage adapté.

## Revendications

1. Dispositif de détection de perte de synchronisation dans un réseau de transmission d'informations numériques par paquets, la trame comportant des suites de paquets d'information entre lesquelles sont insérés des paquets de synchronisation, caractérisé en ce qu'il comporte, dans les circuits de réception, un circuit à deux compteurs cycliques (C₁, C₂), comptant au rythme mot et dont la période est la durée d'un paquet, le premier (C₁) initialisé par un signal de reconnaissance des paquets de synchronisation (INIT), et le second (C₂) initialisé par un signal de fin de comptage (TC₁) issu du premier compteur, et des moyens d'analyse de la phase relative entre les deux compteurs pour générer des impulsions caractéristiques de pertes de synchronisation paquet lorsque cette phase relative est modifiée.

2. Dispositif selon la revendication 1, caractérisé en ce que les moyens d'analyse comportent un circuit de comparaison (3, 4) relié aux sorties de fin de comptage des deux compteurs pour générer des impulsions (PSP) lorsque seulement l'un des deux compteurs est arrivé en fin de cycle de comptage.

3. Dispositif selon l'une des revendications 1 et 2, caractérisé en ce qu'il comporte en outre un second circuit à compteurs cycliques, comptant au rythme bit et dont la période est la durée d'un mot, le premier initialisé par un signal de reconnaissance de synchronisation fine et le second par un signal de fin de comptage issu du premier, et des moyens d'analyse pour générer des impulsions (PSP₂) caractéristiques de pertes de synchronisation fixes, de durées inférieures à une période mot.

4. Dispositif selon la revendication 3, caractérisé en ce qu'il comporte en outre un circuit de combinaison relié à la sortie des moyens d'analyse de perte de synchronisation paquet et à la sortie des moyens d'analyse de perte de synchronisation fine pour générer un signal de perte de synchronisation combiné.

5. Dispositif selon la revendication 3, caractérisé en ce qu'il comporte en outre un circuit sélecteur relié à la sortie des moyens d'analyse de perte de synchronisation paquet et à la sortie des moyens d'analyse de perte de synchronisation fine pour générer un signal de perte de synchronisation de sensibilité choisie en fonction du type de transmission.

6. Utilisation du dispositif selon l'une des revendications précédentes dans un réseau de transmissions numériques par paquets.

## Patentansprüche

1. Synchronisationsverlust-Detektionsvorrichtung in einem Netz zur paketweisen Übertragung digitaler Informationen, wobei das Raster Folgen von Informationspaketen enthält, zwischen die Synchronisationspakete eingeschoben sind, dadurch gekennzeichnet, daß sie in den Empfangsschaltungen eine Schaltung mit zwei zyklischen Zählern (C₁, C₂) enthält, die im Worttakt zählen und deren Periode der Dauer eines Pakets entspricht, wobei der erste (C₁) durch ein Synchronisationspaket-Erkennungssignal (INIT) initialisiert wird, während der zweite (C₂) durch ein Zähl-Ende-Signal (TC₁) initialisiert wird, und Mittel zum Analysieren der relativen Phase zwischen den zwei Zählern enthält, um für Synchronisierungspakteverluste charakteristische Impulse zu erzeugen, wenn diese relative Phase modifiziert wird.

2. Vorrichtung nach Anspruch 1, dadurch gekennzeichnet, daß die Analysiermittel eine Vergleichsschaltung (3, 4) enthalten, die an die Zähl-Ende-Ausgänge der zwei Zähler angeschlossen sind, um Impulse (PSP) zu erzeugen, wenn nur einer der zwei Zähler am Ende des Zählzyklus angekommen ist.

3. Vorrichtung nach einem der Ansprüche 1 und 2, dadurch gekennzeichnet, daß sie ferner eine zweite Schaltung mit zyklischen Zählern enthält, die im Bittakt zählt und deren Periode der Dauer eines Worts entspricht, wobei der erste durch ein Synchronisations-Ende-Signal initialisiert wird, während der zweite durch ein vom ersten abgegebenes Zähl-Ende-Signal initialisiert wird, und Analysiermittel enthält, die für feste Synchronisationsverluste kennzeichnende Impulse (PSP₂) erzeugen, deren Dauer kleiner als eine Wortperiode ist.

4. Vorrichtung nach Anspruch 3, dadurch gekennzeichnet, daß sie ferner eine Kombinationsschaltung enthält, die an den Ausgang der Analysiermittel für die Synchronisierungspaketverluste und an den Ausgang der Analysiermittel für die Synchronisations-Ende-Verluste angeschlossen ist, um ein kombiniertes Synchronisationsverlustsignal zu erzeugen.

5. Vorrichtung nach Anspruch 3, dadurch gekennzeichnet, daß sie ferner eine Wählschaltung enthält, die an den Ausgang der Analysiermittel für die Synchronisierungspaketverluste und an den Ausgang der Analysiermittel für die Synchronisations-Ende-Verluste angeschlossen ist, um ein Empfindlichkeits-Synchronisierungsverlustsignal zu erzeugen, das abhängig von der Art der Übertragung gewählt ist.

6. Anwendung der Vorrichtung nach einem der vorhergehenden Ansprüche in einem digitalen Paketübertragungsnetz.

## Claims

1. Device for detecting loss of synchronisation in a digital packet information transmission network, the frame comprising sequences of information packets between which are inserted synchronisation packets, characterised in that it comprises, in the reception circuits, a circuit with two cyclic counters (C₁, C₂), counting at the word rate and whose period is the duration of a packet, the first (C₁) initialised by a synchronisation packet recognition signal (INIT), and the second (C₂) initialised by an end-of-count signal (TC₁) issued by the first counter, and means for analysis of the relative phase between the two counters in order to generate pulses which are characteristic of losses of packet synchronisation when this relative phase is modified.

2. Device according to Claim 1, characterised in that the analysis means comprise a comparison circuit (3, 4) connected to the end-of-count outputs of the two counters in order to generate pulses (PSP) when only one of the two counters has arrived at the end of a count cycle.

3. Device according to either of Claims 1 or 2, characterised in that it further comprises a second circuit with cyclic counters, counting at the bit rate and whose period is the duration of a word, the first initialised by a fine synchronisation recognition signal and the second by an end-of-count signal issued by the first, and analysis means for generating pulses (PSP₂) which are characteristic of losses of fine synchronisation, with durations less than a word period.

4. Device according to Claim 3, characterised in that it further comprises a combination circuit connected to the output of the means for analysis of loss of packet synchronisation and to the output of the means for analysis of loss of fine synchronisation in order to generate a combined loss of synchronisation signal.

5. Device according to Claim 3, characterised in that it further comprises a selector circuit connected to the output of the means for analysis of loss of packet synchronisation and to the output of the means for analysis of loss of fine synchronisation in order to generate the loss of synchronisation signal with a sensitivity which is chosen on the basis of the type of transmission.

6. Use of the device according to one of the preceding claims in a digital packet transmission network.
